# EUROPÄISCHE PATENTSCHRIFT

(11) **EP 1 547 348 B1**
(45) Veröffentlichungstag und Bekanntmachung des Hinweises auf die Patenterteilung: **15.11.2006**
(21) Anmeldenummer: 03753458.3
(22) Anmeldetag: 25.09.2003
(51) Int. Cl.: H04L 29/12, H04L 12/24

(54) **VERFAHREN UND VORRICHTUNG ZUR STEUERUNG EINES DRUCKERS ODER KOPIERERS DURCH ZUGRIFF AUF DATENOBJEKTE MIT HILFE VON DEN DATENOBJEKTEN ZUGEORDNETEN NETZWERKADRESSEN**
METHOD AND DEVICE FOR CONTROLLING A PRINTER OR A COPIER BY ACCESSING DATA OBJECTS BY MEANS OF THE NETWORK ADDRESSES ASSOCIATED WITH SAID DATA OBJECTS
PROCEDE ET DISPOSITIF POUR COMMANDER UNE IMPRIMANTE OU UN PHOTOCOPIEUR PAR ACCES A DES OBJETS DE DONNEES A L'AIDE D'ADRESSES DE RESEAU ASSOCIEES AUX OBJETS DE DONNEES

(30) Priorität: 30.09.2002 DE 10245528
(43) Veröffentlichungstag der Anmeldung: 29.06.2005
(73) Patentinhaber: Océ Printing Systems GmbH, 85586 Poing (DE)
(72) Erfinder: NEMMAIER, Christoph, 81549 München (DE); SIPPEL, Helmut, 81735 München (DE); DREXLER, Hubert, 84416 Taufkirchen (DE); HOLZNER, Bernhard, 84427 St. Wolfgang (DE)
(74) Vertreter: Schaumburg, Thoenes, Thurn, Landskron
(86) Internationale Anmeldenummer: PCT/EP2003/010689
(87) Internationale Veröffentlichungsnummer: WO 2004/032455

(56) Entgegenhaltungen:
- WO-A-01/44924
- HERKERT H ET AL: "SISA-KONZEPT ALS BASIS FUER RECHNERGESTUETZTES NETZMANAGEMENT" TELCOM REPORT, SIEMENS AG. MUNCHEN, DE, Bd. 10, Nr. 3, Mai 1987 (1987-05), Seiten 165-167, XP000820086 ISSN: 0344-4724

## Beschreibung

Die Erfindung betrifft ein Verfahren und eine Vorrichtung zum Steuern eines elektrofotografischen Druckers oder Kopierers. Der Drucker oder Kopierer enthält mindestens zwei Steuereinheiten, zwischen denen Daten über mindestens eine Datenleitung übertragen werden. In einem Speicherbereich der zweiten Steuereinheit ist ein erstes Datenobjekt gespeichert.

Die Administration von bekannten Druck- oder Kopiersystemen erfolgt über eine Bedieneinheit des Druckers oder Kopierers. Ein Programmelement setzt die Bedienereingaben in Zugriffe auf Datenobjekte um, die insbesondere Steuervariablen und Konstanten umfassen. In modular aufgebauten Steuerungssystemen bei bekannten Druckern oder Kopierern werden diese Datenobjekte in all den Steuereinheiten gespeichert, in denen sie zum Steuern benötigt werden. Je nach Datenverbindung zwischen den Steuereinheiten kann auf in den Steuereinheiten gespeicherten Datenobjekte nicht direkt durch das Programm zum Auswerten der Bedienfeldeingaben zugegriffen werden, wodurch das Ändern eines Datenobjekts und/oder die Anzeige eines Datenobjekts aufwendige Verarbeitungsschritte erfordert.

Bei bekannten Druckern oder Kopierern wurden die über das Bedienfeld zugänglichen Datenobjekte zusätzlich in einem Speicherbereich einer zentralen Steuereinheit gespeichert. Diese zentrale Steuereinheiten ermittelte bei Druckerstillstand diese Datenobjekte aus den einzelnen Steuereinheiten und veränderte die Datenobjekte bei entsprechenden Eingaben über das Bedienfeld. Alternativ werden die Kommunikationsprotokolle, mit denen die Datenübertragung zwischen einzelnen Steuereinheiten des Druckers oder Kopierers erfolgt, um die sogenannte transparente Kommunikation erweitert, bei der von einer ersten Steuereinheit auf voreingestellten Wegen zu einer weiteren zweiten Steuereinheit transportiert werden, ohne dass die erste Steuereinheit die Daten selbst analysiert.

Jedoch ist es insbesondere für Wartunqszwecke wünschenswert, einen direkten Zugriff auf Datenobjekte des Druckers oder Kopierers durch eine externe Datenverarbeitungseinheit über eine Schnittstelle des Druckers oder Kopierers zu erhalten.

Ein System zur Überwachung von Computer Netzwerkressourcen ist bekannt aus Dokument WO 0144924 A.

Aus dem Dokument US 6,119,156 ist ein Netzwerkverwaltungssystem für einen Digitaldrucker bekannt, das auf einem Simple Network Management Protokoll (SNMP) basiert. Mehrere Management- bzw. Administratorsysteme können mit Hilfe des SNMP auf zwei Agenten über ein Netzwerk zugreifen.

Aus dem Dokument US 6,314,089 B1 ist ein Datenobjekt bekannt, das dynamisch erzeugt wird und alle Informationen über Verbindungen enthält, die während einer Transaktion stattfinden. Das Objekt enthält auch Informationen zu Angaben, die bei einer Kommunikation während einer Transaktion genutzt worden sind. Die Kommunikation zu einer Transaktion kann dabei mit Hilfe eines Telefons, Briefen, Faxen, E-Mail und weiteren Übertragungsmedien erfolgen.

Aus dem Dokument DE 100 56 060 A1 ist ein Drucksystem bekannt, bei dem mindestens ein Druckparameter eines Druckers überwacht wird. Mit Hilfe einer Sensoranordnung wird ein Druckparameter ermittelt, der mit Hilfe eines Kommunikationsnetzes codiert zu einer Steuerungsanordnung übertragen wird, die mit dem Drucker über das Kommunikationsnetz verbunden ist.

Aufgabe der Erfindung ist es, ein Verfahren nach Anspruch 1 und eine Vorrichtung nach Anspruch 22 zum Steuern eines elektrofotografischen Druckers oder Kopierers anzugeben, das bzw. die auf einfache Art und Weise einen Zugriff auf Datenobjekte des Druckers ermöglicht.

Die Aufgabe wird für ein Verfahren zum Steuern eines elektrofotografischen Druckers oder Kopierers mit den Merkmalen des Patentanspruchs 1 gelöst. Vorteilhafte Weiterbildungen sind in den abhängigen Patentansprüchen angegeben.

Bei dem erfindungsgemäßen Verfahren erhalten sowohl die Steuereinheiten als auch das in der zweiten Steuereinheit gespeicherte Datenobjekt eine Netzwerkadresse. Dadurch ist die Position des Datenobjekts eindeutig ermittelbar, wodurch durch jede der Steuereinheiten direkt auf das Datenobjekt und somit auf die Daten des Datenobjekts zugegriffen werden kann. Die Verwaltung des Datenobjekts ist dadurch in einem elektrofotografischen Drucker oder Kopierer mit mindestens zwei Steuereinheiten erheblich vereinfacht. Wird z.B. ein neues Datenobjekt eingefügt oder ein vorhandenes Datenobjekt entfernt, müssen die Steuerungsprozeduren aller Steuereinheiten nicht mehr angepasst werden, die die für den Zugriff auf das Datenobjekt erforderlichen Daten zwischen den Steuereinheiten nur übertragenen. Mit Hilfe der Netzwerkadresse des Datenobjekts werden diese Daten einfach an die Steuereinheit weitergeleitet, in der das Datenobjekt gespeichert ist, auf die zugegriffen wird. Routing-Tabellen, die zur Zuordnung des Datenobjekts beim Stand der Technik in allen Netzknoten vorhanden sein müssen, sind durch das erfindungsgemäße Verfahren nicht mehr erforderlich.

Ein zweiter Aspekt der Erfindung betrifft eine Vorrichtung zum Steuern eines elektrofotografischen Druckers oder Kopierers, die mindestens zwei Steuereinheiten enthält. Die Steuereinheiten sind über mindestens eine Datenleitung zum Übertragen von Daten miteinander verbunden. Der ersten Steuereinheit ist eine erste Kennung zugeordnet und der zweiten Steuereinheit ist eine zweite Kennung zugeordnet. In einem Speicherbereich der zweiten Steuereinheit ist mindestens ein Datenobjekt speicherbar. Dem Datenobjekt ist eine dritte Kennung zugeordnet. Die erste, zweite und dritte Kennung sind Netzwerkadressen.

Dadurch wird erreicht, dass auf das Datenobjekt einfach durch eine beliebige Steuereinheit in einem ersten Netzwerk oder in einem mit dem ersten Netzwerk verbundenen zweiten Netzwerk direkt zugegriffen werden kann, ohne dass auf dem Übertragungsweg zur Steuereinheit, in der das Datenobjekt gespeichert ist, Übertragungsweginformationen zum Weiterleiten der Anforderung zum Auslesen oder einer Anforderung zum Schreiben bekannt sein müssen. Werden zusätzliche Datenobjekte in einer zweiten Steuereinheit implementiert, so kann eine mit dieser zweiten Steuereinheit über eine Datenleitung verbundene erste Steuereinheit sehr einfach auf dieses Datenobjekt zugreifen sowie auf die Daten des Datenobjekts zugreifen, insbesondere dann, wenn die zweite Steuereinheit hierarchisch mehrere Ebenen unter der ersten Steuereinheit angeordnet ist. Änderungen an Steuereinheiten, die hierarchisch zwischen der ersten und der zweiten Steuereinheit angeordnet sind, sind zum Zugriff auf das Datenobjekt nicht notwendig. Der Aufbau von Steuerungssystemen kann durch diese sehr einfache Art der Verwaltung von Datenobjekten und des Zugriffs auf Datenobjekte, insbesondere der Variablenverwaltung und des Variablenzugriffs, erheblich reduziert werden. Sowohl der Rechenaufwand als auch der Speicherbedarf der einzelnen Steuereinheiten kann durch diese erfindungsgemäße Vorrichtung erheblich reduziert werden. Eine solche erfindungsgemäße Vorrichtung kann vorteilhaft zum Steuern eines elektrofotografischen Druckers oder Kopierers eingesetzt werden.

Zum besseren Verständnis der vorliegenden Erfindung wird im Folgenden auf das in den Zeichnungen dargestellte bevorzugte Ausführungsbeispiel Bezug genommen, das an Hand spezifischer Terminologie beschrieben ist. Es sei jedoch darauf hingewiesen, dass der Schutzumfang der Erfindung dadurch nicht eingeschränkt werden soll, da derartige Veränderungen und weitere Modifizierungen an der gezeigten Vorrichtung und/oder dem Verfahren, sowie derartige weitere Anwendungen der Erfindung, wie sie darin aufgezeigt sind, als übliches derzeitiges oder künftiges Fachwissen eines zuständigen Fachmannes angesehen werden. Die Figuren zeigen ein Ausführungsbeispiel der Erfindung, nämlich:
- Figur 1: ein Blockschaltbild mehrerer Steuereinheiten zum Steuern eines elektrofotografischen Druckers; und
- Figur 2: ein Blockschaltbild, in dem die hierarchische Struktur der Steuereinheiten des Druckers nach Figur 1 dargestellt ist.

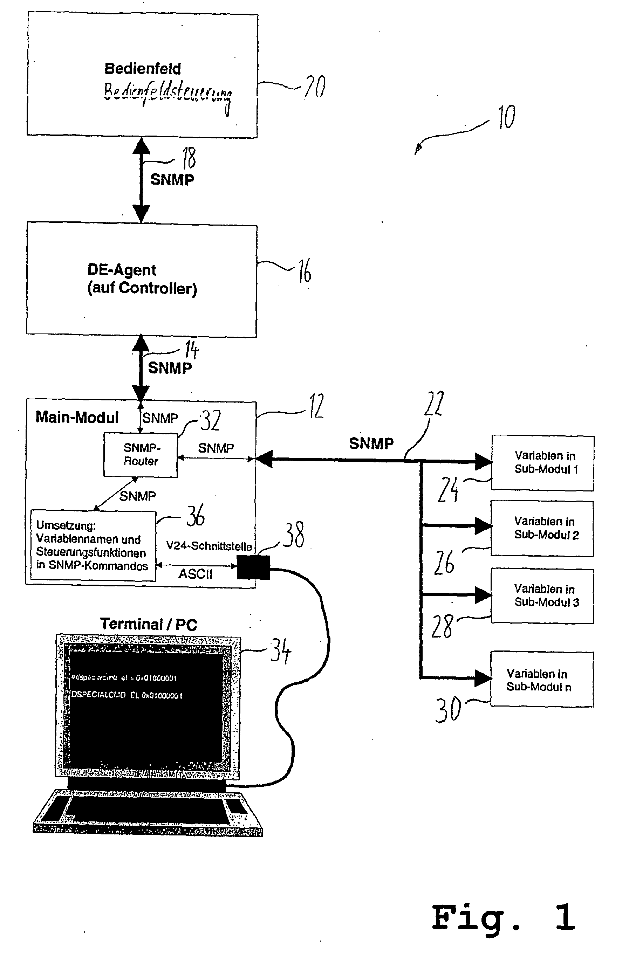

In Figur 1 ist ein Steuerungs- und Wartungssystem 10 eines elektrofotografischen Druckers dargestellt. Eine Hauptsteuereinheit 12 ist über eine Datenleitung 14 mit einer Steuereinheit 16 verbunden, die einen sogenannten Druckersteuerungs-Agenten enthält. Der Druckersteuerungs-Agent ist eine Software, die von der Steuereinheit 16 abgearbeitet wird und auf Anfrage bestimmte Informationen zurückliefert, die sie zuvor selbständig gesammelt hat. Dieses Sammeln und Bereitstellen von Informationen führt der Agent selbständig durch.

Die Steuereinheit 16 ist über eine Datenleitung 18 mit der Bedienfeldsteuereinheit 20 verbunden. Die Bedienfeldsteuereinheit 20 steuert Ausgaben über eine Anzeigeeinheit des Druckers und wertet Eingaben aus, die z.B. über einen tastsensitiven Bildschirm erfolgen. Die Bedienfeldsteuereinheit 20 ruft beim Druckersteuerungs-Agenten der Steuereinheit 16 vom Druckersteuerungs-Agenten gesammelte und bereitgestellte Werte von Steuervariablen sowie weitere Daten und Datenobjekte des Druckers ab und gibt sie in geeigneten Darstellungsformaten auf der Anzeigeeinheit aus. Die Hauptsteuereinheit 12 ist über ein Netzwerk 22 mit weiteren Steuereinheiten 24 bis 30 verbunden. In den Steuereinheiten 24 bis 30 sind Datenobjekte, z.B. Werte von Variablen oder Werte von Konstanten, gespeichert, die zum Steuern des Druckers erforderlich sind. Zumindest einige dieser Datenobjekte sind auf dem Bedienfeld des Druckers anzeigbar und über das Bedienfeld durch eine Bedienperson veränderbar. Die Werte von anderen Variablen und/oder Konstanten werden mit Hilfe von Sensoren erfassten Messwerten automatisch geändert.

Die Hauptsteuereinheit 12 ist über eine V.24-Schnittstelle 38 mit einem Personalcomputer 34 verbunden, der zu Wartungszwekken und zu Einstellungen sowie zur Fehleranalyse temporär mit der Hauptsteuereinheit 12 verbunden ist. Die Datenübertragung von Steuerbefehlen zur Hauptsteuereinheit 12 sowie von Werten und Daten von der Hauptsteuereinheit 12 zum Personalcomputer 34 erfolgt mit Hilfe von sogenannten ASCII-Zeichen und -Befehlen.

Eine Wandlereinheit 36 setzt die ASCII-Steuerbefehle in Steuerbefehle gemäß dem Simple Network Management Protocol (SNMP) um. Mit Hilfe des Simple Network Management Protocols erfolgt auch die Datenübertragung über die Datenleitungen 14, 18 sowie über das Netzwerk 22. Die Hauptsteuereinheit 12 enthält weiterhin einen Router 32, der sowohl die Daten von der Wandlereinheit 36 zu den Steuereinheiten 16, 24 bis 30 weiterleitet, als auch Daten von diesen Steuereinheiten 16, 24 bis 30 zur Wandlereinheit 38. Die von den Steuereinheiten 16, 24 bis 30 zur Wandlereinheit 36 übertragenen Daten werden durch die Wandlereinheit 36 in ASCII-Daten umgewandelt und über die V.24-Schnittstelle 38 zum Personalcomputer 34 übertragen.

Über die V.24-Schnittstelle 38 der Hauptsteuereinheit 12 kann somit in einfacher Art und Weise auf Datenobjekte zugegriffen werden, die in beliebigen Steuereinheiten 16, 20, 24 bis 30 des Druckers gespeichert sind, wobei die Werte d.h die Daten der Datenobjekte ausgelesen und/oder neu geschrieben werden können. Mit Hilfe des Personalcomputers 34 können somit auch Datenobjekte angezeigt und verändert werden, die insbesondere Parameter des Druckers betreffen, die nicht am Bedienfeld anzeigbar und/oder einstellbar sind.

Vorzugsweise ist der Wert jedes Datenobjekts nur in einer der Steuereinheiten 12, 16, 24 bis 30 gespeichert und wird bei Bedarf über das Netzwerk 22 und/oder die Datenleitungen 14, 18 von anderen Steuereinheiten gelesen und/oder geschrieben. Bei anderen Ausführungsbeispielen sind zumindest einige Datenobjekte in mehreren Steuereinheiten gleichzeitig gespeichert, wobei zu voreingestellten Zeitpunkten die Daten der Datenobjekte synchronisiert werden.

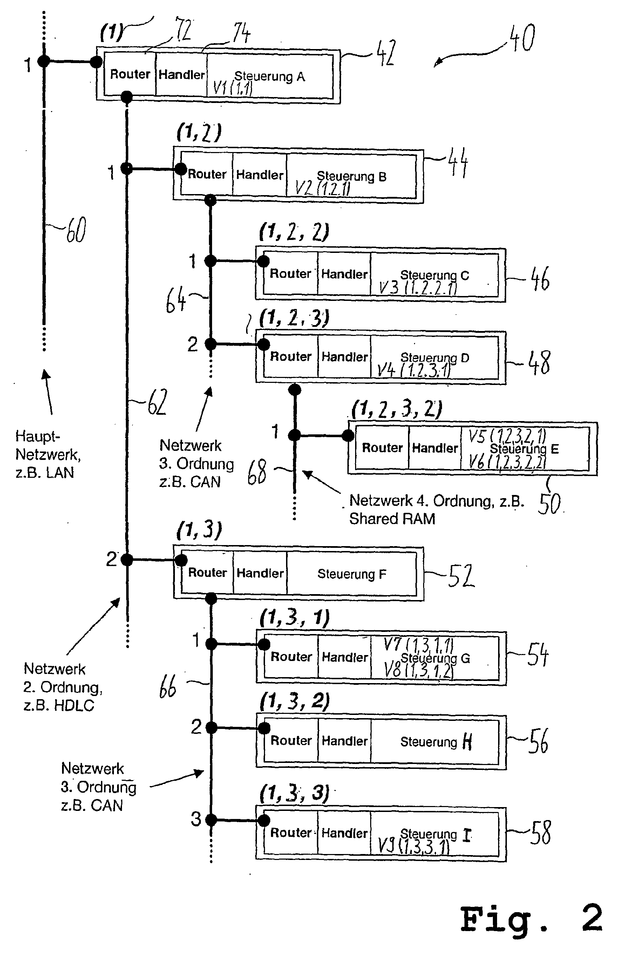

In Figur 2 ist ein Steuerungssystem 40 ähnlich dem Steuerungssystem 10 nach Figur 1 dargestellt. Das Steuerungssystem 40 hat eine baumartige Struktur und einen hierarchischen Aufbau. Die einzelnen Hierarchieebenen werden auch als Schichten bezeichnet. Eine Hauptsteuereinheit 42 des Druckers ist mit einem übergeordneten Netzwerk 60 verbunden. Das Netzwerk 60 ist z.B. ein Local Area Network (LAN). Über ein Netzwerk 62 sind untergeordnete Steuereinheiten 44, 52 mit der Hauptsteuereinheit 42 verbunden. Das Netzwerk 62 wird mit einem synchronen Steuerungsprotokoll, dem High Level Data Link Control (HDLC), betrieben. Die Steuereinheit 44 ist weiterhin mit einem untergeordneten Netzwerk 64 verbunden, das als CAN-Bus ausgeführt ist. Über diesen CAN-Bus sind die Steuereinheiten 46, 48 mit der Steuereinheit 44 direkt verbunden.

Die Steuereinheit 48 ist weiterhin mit einem untergeordneten Netzwerk 68 verbunden, das z.B. als Shared RAM ausgeführt ist. Die Steuereinheit 52 ist ähnlich wie die Steuereinheit 44 mit weiteren Steuereinheiten 54, 56, 58 verbunden. Jede Steuereinheit 42 bis 58 enthält jeweils einen Router und einen sogenannten Handler, wobei der Router der Steuereinheit 42 mit 72 und der Handler der Steuereinheit 42 mit 74 bezeichnet ist. Handler sind allgemein Programmelemente eines logischen Ein-Ausgabesystems.

Den Steuereinheiten 42 bis 58 ist jeweils eine Adresse zugeordnet, mit der sie in der hierarchischen Netzwerkstruktur der Steuereinheiten 42 bis 58 eindeutig identifizierbar sind. Diese Adresse gibt weiterhin eine Position in der Netzwerkhierarchie an, wodurch der Weg von einer beliebigen Stelle des Netzwerks aus zu dieser Position mit Hilfe dieser Adresse bestimmbar ist.

Der Hauptsteuereinheit 42 ist die Adresse (1), der Steuereinheit 44 die Adresse (1,2), der Steuereinheit 46 die Adresse (1,2,2), der Steuereinheit 48 die Adresse (1,2,3), der Steuereinheit 50 die Adresse (1,2,3,2), der Steuereinheit 52 die Adresse (1,3), der Steuereinheit 54 die Adresse (1,3,1), der Steuereinheit 56 die Adresse (1,3,2) und der Steuereinheit 58 die Adresse (1,3,3). Bis auf die Steuereinheiten 52 und 56 enthalten die anderen Steuereinheiten 42 bis 50, 54, 58 jeweils mindestens eine Variable V1 bis V9. Die Variablen V1 bis V9 sind in einem Speicherbereich der jeweiligen Steuereinheit 42 bis 50, 54, 58 gespeichert bzw. in einem Speicherbereich, der von der jeweiligen Steuereinheit 42 bis 50, 54, 58 verwaltet wird. In einem Speicherbereich der Hauptsteuereinheit 42 ist der Wert der Variablen V1 gespeichert.

Der Variablen V1 ist ähnlich einer der Steuereinheiten 42 bis 58 eine Adresse zugeordnet, wobei der Variablen V1 die Adresse (1,1) zugeordnet ist, die hierarchisch der Netzwerkadresse der Hauptsteuereinheit 42 untergeordnet ist. Die Variable V2 ist in einem Speicherbereich der Steuereinheit 44 gespeichert, wobei der Variablen V2 die Netzwerkadresse (1,2,1) zugeordnet ist. Der Variablen V3 der Steuereinheit 46 ist die Netzwerkadresse (1,2,2,1) und der Variablen V4 der Steuereinheit 48 ist die Netzwerkadresse (1,2,3,1) zugeordnet. Die Variablen V5 und V6 sind in einem Speicherbereich der Steuereinheit 50 gespeichert, wobei der Variablen V5 die Netzwerkadresse (1,2,3,2,1) und der Variablen V6 die Netzwerkadresse (1,2,3,2,2) zugeordnet ist. Die Steuereinheit 54 enthält die Variablen V7 und V8. Die Variable V7 hat die Netzwerkadresse (1,3,1,1) und die Variable V8 die Netzwerkadresse (1,3,1,2). Der Variablen V9 der Steuereinheit 58 ist die Netzwerkadresse (1,3,3,1) zugeordnet. Die Steuereinheiten 52 und 56 enthalten keine Variablen.

Ermittelt z.B. die Steuereinheit 58 mit Hilfe eines Messwerts eines Sensors einen neuen Wert für die Variable V1, überträgt die Steuereinheit 58 eine entsprechende Information und die Netzwerkadresse (1,1) an das Netzwerk 66. Diese Information wird zusammen mit der Netzwerkadresse (1,1) über das Netzwerk 66 zum Router der Steuereinheit 52 übertragen, der die Information zusammen mit der Netzwerkadresse (1,1) an das übergeordnete Netzwerk 62 weiterleitet. Zuvor überprüft der Router der Steuereinheit 52, ob die Netzwerkadresse (1,1) der Steuereinheit 52 untergeordnet ist, d.h. ob es sich bei der Netzwerkadresse um eine Adresse im Netzwerk 66 handelt. Jedoch ist die Netzwerkadresse (1,1) der Variablen V1 keine der Steuereinheit 42 hierarchisch untergeordnete Netzwerkadresse. Somit überträgt der Router die Netzwerkadresse (1,1) und die Information zum Ändern des Wertes der Variablen V1, wie bereits beschrieben, an das Netzwerk 62. Über das Netzwerk 62 wird die Netzwerkadresse (1,1) zusammen mit der Information zum Router der Steuereinheit 44 und zum Router 72 der Steuereinheit 42 übertragen. Der Router der Steuereinheit 44 ermittelt, dass die Netzwerkadresse (1,1) nicht die Steuereinheit 44 und keine dieser Steuereinheit 44 hierarchisch untergeordneten Steuereinheiten 46, 48, 50 betrifft.

Der Router 72 der Steuereinheit 42 ermittelt, dass die Netzwerkadresse (1,1) eine Netzwerkadresse ist, die der Steuereinheit 42 hierarchisch untergeordnet ist. Der Router 72 übergibt dem Handler 74 die Netzwerkadresse (1,1) und die Information zum Ändern des Variablenwertes der Variablen V1. Der Handler 74 ermittelt, dass die Netzwerkadresse (1,1) der Variablen V1 zugeordnet ist. Der Handler 74 hat direkten Zugriff auf die Variable V1 bzw. direkten Zugriff auf den Speicherbereich der Variablen V1 und ändert entsprechend der übertragenen Information den Wert der Variablen V1 im Speicher. Der Handler 74 erzeugt eine Bestätigungsnachricht, die der Steuereinheit 56 über die Netzwerke 62 und 66 zugeführt wird. Benötigt die Steuereinheit 52 für einen Steuervorgang den Wert der Variablen V6, sendet sie eine Leseanforderung für die Variable V6 an die Netzwerkadresse (1, 2, 3, 2, 2). Diese Anforderung übergibt die Steuereinheit 52 dem Router der Steuereinheit 52, der überprüft, ob die Netzwerkadresse (1,2,3,2,2) eine Netzwerkadresse im untergeordneten Netzwerk 66 ist. Dies ist nicht der Fall, so dass der Router diese Leseanforderung an das übergeordnete Netzwerk 62 überträgt.

Der Router der Steuereinheit 44 überprüft, ob die Netzwerkadresse (1,2,3,2,2) eine der Steuereinheit 44 untergeordnete Netzwerkadresse ist. Dies ist der Fall, so dass der Router der Steuereinheit 44 die Leseanforderung an das Netzwerk 64 überträgt. Der Router der Steuereinheit 46 überprüft, ob die Netzwerkadresse (1,2,3,2,2) eine der Steuereinheit 46 untergeordnete Netzwerkadresse betrifft. Dies ist nicht der Fall. Der Router der Steuereinheit 48 überprüft, ob die Netzwerkadresse (1,2,3,2,2) eine der Steuereinheit 48 untergeordnete Netzwerkadresse ist. Dies ist der Fall. Der Handler der Steuereinheit 48 überprüft anschließend, ob die Netzwerkadresse eine in der Steuereinheit 48 gespeicherte Variable betrifft. Dies ist nicht der Fall. Daraufhin überträgt der Router der Steuereinheit 48 die Leseanforderung an das Netzwerk 68. Der Router der Steuereinheit 50 überprüft, ob die Adresse (1,2,3,2,2) eine der Steuereinheit 50 untergeordnete Netzwerkadresse ist. Dies ist der Fall.

Der Router übergibt die Leseanforderung dem Handler der Steuereinheit 50. Der Handler der Steuereinheit 50 ermittelt, dass die Netzwerkadresse (1,2,3,2,2) der Variablen V6 zugeordnet ist. Daraufhin wird der Wert der Variablen V6 ausgelesen und eine Antwortnachricht erzeugt, die den Wert der Variablen V6 enthält. Die Nachricht wird an die Adresse der Steuereinheit, die den Wert der Variablen V6 angefordert hat, in im Wesentlichen umgekehrter Richtung auf dem Übertragungsweg zurückgesendet, wie die Leseanforderung zur Steuereinheit 50 übertragen wurde.

Durch das Zuordnen einer Netzwerkadresse zu den Variablen V1 bis V9 ist jede dieser Variablen im Netzwerk eindeutig adressierbar. Dadurch kann der Zugriff, d.h. das Auslesen des Wertes der Variablen oder das Schreiben eines neuen Wertes der Variablen einfach über das Netzwerk von jeder Stelle des Netzwerks aus erfolgen. Auch bei einer Kopplung mehrerer Netzwerke 60, 62, 64, 66, 68 können über mehrere Netzwerke hinweg die Zugriffe auf Variablen erfolgen. So kann z.B. über das Local Area Network 60 auch eine Variable von einem an dieses Netzwerk 60 angeschlossenen Host-Computer ausgelesen werden. Dadurch können z.B. von diesem Host-Computer aus Wartungs- und Einstellungsarbeiten sehr einfach und ohne großen Aufwand durchgeführt werden, bei denen Zugriffe auf Variablen von Steuereinheiten 42 bis 58 erforderlich sind.

Wie in Zusammenhang mit Figur 1 beschrieben, kann auch ein Wartungscomputer 34 direkt mit der Steuereinheit 42 verbunden werden, um Wartungs- und Einstellarbeiten vorzunehmen. Dabei kann die Steuereinheit 42 eine Wandlereinheit 36 enthalten, wodurch die Verbindung zum Wartungscomputer 34 nicht direkt zum Übertragen von Wartungsnachrichten gemäß dem SNMP geeignet ist. Die Wandlereinheit 36 wandelt dann die vom Wartungscomputer 34 übertragenen Befehle in SNMP-Befehle um, die dann der entsprechenden Steuereinheit 42 bis 58 zugeführt werden und von der jeweiligen Steuereinheit ausgeführt werden.

Zusätzlich oder alternativ zu dem SNM-Protocol kann auch ein CMI-Protocol (Common Management Information Protocol) bei den Anordnungen gemäß Figur 1 und Figur 2 genutzt werden. Auch können einzelnen von der Datenverarbeitungsanlage abzuarbeitende Prozesse als Steuereinheit im Sinne der Erfindung dienen, denen eine Netzwerkadresse zugewiesen wird. Den von diesen Prozessen verwalteten Variablen wird dann ebenfalls ähnlich wie den Steuerungen 42 bis 58 eine Netzwerkadresse zugewiesen. Als Datenübertragungsstrecken zwischen den Prozessen werden sogenannte Messages, Pipes, Named Pipes und/oder Shared RAM genutzt.

Die Steuereinheiten 42 bis 58 und 12, 16, 20, 24 bis 30 können sowohl als separate Baueinheiten ausgeführt sein als auch Programmelemente, die in einer Steuereinheit parallel, z.B. als Task in einer Multitasking-Umgebung, abgearbeitet werden. Durch die Zuordnung von Netzwerkadressen zu den Variablen ist auch bei mehreren parallel abgearbeiteten Tasks, d.h. bei mehreren parallel abgearbeiteten Prozessen, ein einfacher Austausch von Werten von Variablen möglich. Eine zentrale Variablenverwaltung kann somit entfallen. Auch dass die gleiche Variable in mehreren separaten Steuereinheiten parallel vorhanden ist, ist mit dem erfindungsgemäßen Verfahren bzw. mit der erfindungsgemäßen Vorrichtung nicht mehr erforderlich, wodurch auch eine Synchronisation dieser Variablenwerte entfallen kann.

Sind die Netzwerkadressen wie bei der Anordnung der Steuereinheiten nach Figur 2 hierarchisch vergeben, so kann der Weg zur Steuereinheit, in der die jeweilige Variable V1 bis V9 gespeichert ist, einfach an Hand der Netzwerkadresse ermittelt werden. Durch eine solche hierarchische Struktur der Netzwerkadressen ist der Übertragungsweg zu jeder Netzwerkadresse, d.h. zu jeder Steuereinheit und jeder Variablen, der eine Netzwerkadresse zugeordnet ist, eindeutig bestimmt. Ein aufwendiges Routen mit Hilfe von Routing-Tabellen oder ein Absuchen aller Netzwerkzweige entfällt. Der Datenverkehr über die Netzwerke 60 bis 68 kann dadurch erheblich reduziert werden, wodurch die Leitungsfähigkeit der Netzwerke erheblich gesteigert werden kann. Die Router der Steuereinheiten 42, 44, 48, 52 fungieren als Gateway zwischen mehreren Netzwerken. Die Steuereinheiten 42, 44, 48, 52 dienen ferner als Basisknoten des jeweiligen Netzwerks bzw. oder des jeweiligen Netzwerkzweiges. Gegebenenfalls setzen diese Router die übertragenen Daten entsprechend den unterschiedlichen Netzwerkprotokollen an. Somit sind zumindest die Steuereinheiten 42, ist kann einfach aus der Netzwerkadresse (1,2,2,1) der Variablen V3 abgeleitet werden, indem der letzte Teil (,1) der Netzwerkadresse (1,2,2,1) abgetrennt wird, der als Laufstelle der der Steuerung 46 untergeordneten Netzwerkadressen dient.

Im Zusammenhang mit Figur 2 sind das erfindungsgemäße Verfahren und die erfindungsgemäße Vorrichtung für Zugriffe auf Variablen ausführlich beschrieben worden. Für andere Datenobjekte, wie z.B. Konstanten, ist das erfindungsgemäße Verfahren und die erfindungsgemäße Vorrichtung in gleicher Weise einsetzbar.

Obgleich in den Zeichnungen und in der vorhergehenden Beschreibung ein bevorzugte Ausführungsbeispiel aufgezeigt und detailliert beschrieben ist, sollte dies als rein beispielhaft und die Erfindung nicht einschränkend angesehen werden. Es wird darauf hingewiesen, dass nur das bevorzugte Ausführungsbeispiel dargestellt und beschrieben ist und sämtliche Veränderungen und Modifizierungen, die derzeit und künftig im Schutzumfang der Erfindung liegen, geschützt werden sollen.

### Bezugszeichenliste

- 10: Steuerungs- und Wartungssystem
- 12: Hauptsteuereinheit
- 14, 18: Datenleitung
- 16, 20, 24, 26, 28, 30: Steuereinheiten
- 32: Router
- 36: Wandlereinheit
- 34: Wartungsrechner
- 38: Schnittstelle
- 40: Steuerungssystem
- 42 bis 58: Steuerungen
- 60 bis 68: Netzwerk
- 72: Router
- 74: Handler

## Patentansprüche

1. Verfahren zum Steuern eines Druckers oder Kopierers,
bei dem Daten zwischen mindestens einer ersten Steuereinheit (44) und einer zweiten Steuereinheit (46) über mindestens eine Datenleitung (64) übertragen werden,
der ersten Steuereinheit (44) eine erste Kennung (1,2) zugeordnet wird,
der zweiten Steuereinheit (46) eine zweite Kennung (1, 2, 2) zugeordnet wird,
in einem Speicherbereich der zweiten Steuereinheit (46) mindestens ein Datenobjekt (V3) gespeichert wird,
**dadurch gekennzeichnet, daß**
bei dem dem Datenobjekt eine dritte Kennung (1,2,2,1) zugeordnet wird, wobei die erste, zweite und dritte Kennung Netzwerkadressen sind.

2. Verfahren nach Anspruch 1, **dadurch gekennzeichnet, dass** die Netzwerkadressen hierarchisch organisiert werden und dass die dritte Netzwerkadresse (1,2,2,1) der zweiten Netzwerkadresse (1,2,2)hierarchisch untergeordnet ist.

3. Verfahren nach Anspruch 1 oder 2, **dadurch gekennzeichnet, dass** mit Hilfe der dritten Netzwerkadresse (1,2,2,1) die zweite Netzwerkadresse (1,2,2) ermittelt wird.

4. Verfahren nach Anspruch 2 oder 3, **dadurch gekennzeichnet, dass** der physikalische und/oder logische Übertragungsweg (60 bis 68) zum Zugriff auf das Datenobjekt (V3) durch die hierarchische Position der dritten Netzwerkadresse (1,2,2,1) vorgegeben wird.

5. Verfahren nach einem der vorhergehenden Ansprüche, **dadurch gekennzeichnet, dass** die Daten des Datenobjekts (V3) durch die erste Steuereinheit (44) mit Hilfe der dritten Netzwerkadresse (1,2,2,1) aus dem Speicherbereich der zweiten Steuereinheit (46) ausgelesen und/oder Daten des Datenobjekts mit Hilfe der dritten Netzwerkadresse (1,2,2,1) in den Speicherbereich der zweiten Steuereinheit (46) gespeichert werden.

6. Verfahren nach einem der vorhergehenden Ansprüche, **dadurch gekennzeichnet, dass** die erste Steuereinheit (44) und die zweite Steuereinheit (46) jeweils einen Netzwerkknoten bilden.

7. Verfahren nach einem der Ansprüche 3 bis 6, **dadurch gekennzeichnet, dass** die dritte Netzwerkadresse (1,2,2,1) eine Subadresse der zweiten Netzwerkadresse (1,2,2) ist.

8. Verfahren nach einem der vorhergehenden Ansprüche, **dadurch gekennzeichnet, dass** der Wert des Datenobjekts (V3) einen Einstellparameter angibt.

9. Verfahren nach einem der vorhergehenden Ansprüche, **dadurch gekennzeichnet, dass** die Steuereinheiten hierarchisch organisiert sind, wobei die zweite Steuereinheit (46) der ersten Steuereinheit (44) hierarchisch untergeordnet ist und die Netzwerkadresse (1,2,2) der zweiten Steuereinheit (46) der Netzwerkadresse (1,2) der ersten Steuereinheit hierarchisch untergeordnet ist.

10. Verfahren nach einem der vorhergehenden Ansprüche, **dadurch gekennzeichnet, dass** mindestens eine dritte Steuereinheit (50) vorgesehen wird, die über eine zweite Datenleitung (68) mit der zweiten Steuereinheit (46) verbunden wird und der zweiten Steuereinheit (46) hierarchisch untergeordnet wird, wobei das Datenobjekt durch die dritte Steuereinheit (50) über die zweite Datenleitung (68) ausgelesen und/oder neue Daten des Datenobjekts gespeichert werden.

11. Verfahren nach Anspruch 10, **dadurch gekennzeichnet, dass** die erste Datenleitung und/oder zweite Datenleitung eine CAN-Busverbindung, ei-ne LAN-Verbindung, eine V.24 Datenleitung, oder eine SDLC Datenleitung ist.

12. Verfahren nach einem der vorhergehenden Ansprüche, **dadurch gekennzeichnet, dass** die Übertragung über die erste und/oder zweite Datenleitung mit Hilfe des Simple Management Network Protokoll erfolgt.

13. Verfahren nach einem der vorhergehenden Ansprüche, **dadurch gekennzeichnet, dass** in den Steuereinheiten Router (72) vorgesehen werden, die abhängig von der Netzwerkadresse (1,2,2,1) des Datenobjekts (V3) eine Leseanforderung und/oder eine Schreibanforderung zumindest an eine dem Datenobjekt (V3) hierarchisch übergeordnete Netzwerkadresse (1,2,2) weiterleiten.

14. Verfahren nach einem der vorhergehenden Ansprüche, **dadurch gekennzeichnet, dass** die Position des Datenobjekts (V3) im Netzwerk mit Hilfe der Netzwerkadresse (1,2,2,1) des Datenobjekts (V3) ermittelt wird.

15. Verfahren nach Anspruch 10, **dadurch gekennzeichnet, dass** die von einer vierten Steuereinheit (42) gemäß einem ersten Datenübertragungsstandard übertragenen Kommandos durch die erste Steuereinheit (44) in Kommandos eines zweiten Datenübertragungsstandards umgewandelt werden und die von der zweiten und/oder dritten Steuereinheit (46, 50) gemäß dem zweiten Datenübertragungsstandard zur ersten Steuereinheit (44) übertragenen Daten durch die erste Steuereinheit (44) in Daten gemäß dem ersten Datenübertragungsstandard umwandelt.

16. Verfahren nach Anspruch 15, zudurch **gekennzeichnet**, dass die erste Steuereinheit (44) über eine dritte Datenleitung (62) mit der vierten Steuereinheit (62) verbunden wird, wobei diese vierte Steuereinheit (62) der ersten Steuereinheit (44) übergeordnet ist und die mit Hilfe der ersten Steuereinheit (44) Zugriff auf das Datenobjekt (V3) hat.

17. Verfahren nach Anspruch 15 oder 16, **dadurch gekennzeichnet, dass** die erste, zweite und dritte Steuereinheit (44, 46, 50) im Drucker oder Kopierer angeordnet werden, und dass die vierte Steuereinheit (42) außerhalb des Druckers oder Kopierers angeordnet wird und über eine dritte Datenleitung (62) mit dem Drucker oder Kopierer verbunden wird.

18. Verfahren nach einem der Ansprüche 15 bis 17, **dadurch gekennzeichnet, dass** die dritte Datenleitung (62) eine V.24 Datenleitung ist, und dass der Drucker oder Kopierer über die dritte Datenleitung (62) für Wartungs- und/oder Einstellarbeiten mit der vierten Steuereinheit (42) verbunden ist, wobei die Daten des Datenobjekts (V3) durch die vierte Steuereinheit (42) ausgelesen und/oder neue Daten des Datenobjekts (V3) geschrieben werden.

19. Verfahren nach einem der Ansprüche 15 bis 18, **dadurch gekennzeichnet, dass** die vierte Steuereinheit (42) ein Personalcomputer mit geeigneter Software ist.

20. Verfahren nach einem der vorhergehenden Ansprüche, **dadurch gekennzeichnet, dass** die erste Steuereinheit (44) ein Basisknoten des Netzwerks ist.

21. Verfahren nach einem der vorhergehenden Ansprüche, **dadurch gekennzeichnet, dass** das Datenobjekt eine Variable und/oder eine Konstante enthält.

22. Vorrichtung zum Steuern eines Druckers oder Kopierers mit mindestens einer ersten Steuereinheit (44), der eine erste Kennung (1,2) zugeordnet ist,
mit mindestens einer zweiten Steuereinheit (46), der eine zweite Kennung (1,2,2) zugeordnet ist,
mit mindestens einer Datenleitung (64), über die Daten zwischen der ersten Steuereinheit (44) und der zweiten Steuereinheit (46) übertragbar sind,
wobei die zweite Steuereinheit (46) einen Speicherbereich hat, in dem mindestens ein Datenobjekt (V3) speicherbar ist,
**dadurch gekennzeichnet, daß** dem Datenobjekt (V3) eine dritte Kennung (1,2,2,1) zugeordnet ist und die erste, zweite und dritte Kennung jeweils eine Netzwerkadresse ist.

## Claims

1. Method for controlling a printer or copier,
in which data are transferred between at least a first control unit (44) and a second control unit (46) via at least one data line (64),
a first identifier (1,2) is assigned to the first control unit (44),
a second identifier (1,2,2) is assigned to the second control unit (46),
at least one data object (V3) is stored in a storage region of the second control unit (46),
**characterized in that** a third identifier (1,2,2,1) is assigned to the data object, the first, second and third identifiers being network addresses.

2. Method according to claim 1, **characterized in that** the network addresses are hierarchically organized and that the third network address (1,2,2,1) is hierarchically subordinated to the second network address (1, 2, 2).

3. Method according to claim 1 or 2, **characterized in that** the second network address (1,2,2) is determined with the aid of the third network address (1,2,2,1).

4. Method according to claim 2 or 3, **characterized in that** the physical and/or logical transfer path (60 to 68) for access to the data object (V3) is predetermined by the hierarchical position of the third network address (1,2,2,1).

5. Method according to one of the preceding claims, **characterized in that** the data of the data object (V3) are read out from the storage region of the second control unit (46) by the first control unit (44) with the aid of the third network address (1,2,2,1) and/or data of the data object are stored in the storage region of the second control unit (46) with the aid of the third network address (1,2,2,1).

6. Method according to one of the preceding claims, **characterized in that** the first control unit (44) and the second control unit (46) respectively form a network node.

7. Method according to one of the claims 3 to 6, **characterized in that** the third network address (1,2,2,1) is a sub-address of the second network address (1,2,2).

8. Method according to one of the preceding claims, **characterized in that** the value of the data object (V3) specifies a setting parameter.

9. Method according to one of the preceding claims, **characterized in that** the control units are hierarchically organized, wherein the second control unit (46) is hierarchically subordinate to the first control unit (44), and the network address (1,2,2) of the second control unit (46) is hierarchically subordinate to the network address (1,2) of the first control unit.

10. Method according to one of the preceding claims, **characterized in that** at least one third control unit (50) is provided that is connected with the second control unit (46) via a second data line (68) and is hierarchically subordinate to the second control unit (46), wherein the data object is read out by the third control unit (50) via the second data line (68) and/or new data of the data object are stored.

11. Method according to claim 10, **characterized in that** the first data line and/or the second data line is a CAN bus connection, a LAN connection, a V.24 data line or a SDLC data line.

12. Method according to one of the preceding claims, **characterized in that** the transfer over the first and/or second data line occurs with the aid of the Simple Management Network Protocol.

13. Method according to one of the preceding claims, **characterized in that** routers (72) are provided in the control units, which routers forward, dependent on the network address (1,2,2,1) of the data object (V3), a read request and/or a write request to at least one network address (1,2,2) hierarchically subordinate to the data object (V3).

14. Method according to one of the preceding claims, **characterized in that** the position of the data object (V3) in the network is determined with the aid of the network address (1,2,2,1) of the data object (V3).

15. Method according to claim 10, **characterized in that** the commands transferred by a fourth control unit (42) according to a first data transmission standard are translated by the first control unit (44) into commands of a second data transmission standard, and the data transferred to the first control unit (44) by the second and/or third control unit (46, 50) according to the second data transmission standard are translated by the first control unit (44) into data according to the first data transmission standard.

16. Method according to claim 15, **characterized in that** the first control unit (44) is connected with the fourth control unit (62) via a third data line (62), wherein this fourth control unit (62) is superordinate to the first control unit (44) and has access to the data object (V3) with the aid of the first control unit (44).

17. Method according to claim 15 or 16, **characterized in that** the first, second and third control unit (44, 46, 50) are arranged in the printer or copier, and that the fourth control unit (42) is arranged outside of the printer or copier and is connected with the printer or copier over a third data line (62).

18. Method according to one of the claims 15 to 17, **characterized in that** the third data line (62) is a V.24 data line, and that the printer or copier is connected via the third data line (62) with the fourth control unit (42) for maintenance and setting jobs, wherein the data of the data object (V3) are read out via the fourth control unit (42) and/or new data of the data object (V3) are written.

19. Method according to one of the claims 15 to 18, **characterized in that** the fourth control unit (42) is a personal computer with suitable software.

20. Method according to one of the preceding claims, **characterized in that** the first control unit (44) is a base node of the network.

21. Method according to one of the preceding claims, **characterized in that** the data object contains a variable and/or a constant.

22. Device to control an eletrophotographic printer or copier with at least a first control unit (44) to which a first identifier (1,2) is assigned.
with at least a second control unit (46) to which a second identifier (1,2,2) is assigned,
with at least a data line (64) via which data can be transferred between the first control unit (44) and the second control unit (46),
wherein the second control unit (46) has a storage region in which at least one data object (V3) can be stored,
**characterized in that** a third identifier (1,2,2,1) is assigned to the data object (V3) and the first, second and third identifiers are respectively a network address.

## Revendications

1. Procédé de commande d'une imprimante ou d'un copieur,
dans lequel les données sont transmises entre au moins une première unité de commande (44) et une deuxième unité de commande (46) par l'intermédiaire d'au moins une ligne de données (64),
un premier identifieur (1,2) est associé à la première unité de commande (44),
un deuxième identifieur (1,2,2) est associé à la deuxième unité de commande (46),
au moins un objet de données (V3) est mémorisé dans une zone de mémoire de la deuxième unité de commande (46),
**caractérisé en ce qu'**un troisième identifieur (1,2,2,1) est associé à l'objet de données, le premier, le deuxième et le troisième identifieurs étant des adresses de réseau.

2. Procédé selon la revendication 1, **caractérisé en ce que** les adresses de réseau sont organisées hiérarchiquement, et **en ce que** la troisième adresse de réseau (1,2,2,1) est hiérarchiquement de niveau inférieur à celui de la deuxième adresse de réseau (1,2,2).

3. Procédé selon la revendication 1 ou 2, **caractérisé en ce que** la deuxième adresse de réseau (1,2,2) est obtenue à l'aide de la troisième adresse de réseau (1,2,2,1).

4. Procédé selon la revendication 2 ou 3, **caractérisé en ce que** le chemin de transmission physique et/ou logique (60 à 68) pour l'accès à l'objet de données (V3) est prédéterminé par la position hiérarchique de la troisième adresse de réseau (1,2,2,1).

5. Procédé selon une des revendications précédentes, **caractérisé en ce que** les données de l'objet de données (V3) sont lues par la première unité de commande (44) dans la zone de mémoire de la deuxième unité de commande (46) à l'aide de la troisième adresse de réseau (1,2,2,1), et/ou **en ce que** les données de l'objet de données sont mémorisées dans la zone de mémoire de la deuxième unité de commande (46) à l'aide de la troisième adresse de réseau (1,2,2,1).

6. Procédé selon une des revendications précédentes, **caractérisé en ce que** la première unité de commande (44) et la deuxième unité de commande (46) forment chacune un noeud de réseau.

7. Procédé selon une des revendications 3 à 6, **caractérisé en ce que** la troisième adresse de réseau (1,2,2,1) est une sous-adresse de la deuxième adresse de réseau (1,2,2).

8. Procédé selon une des revendications précédentes, **caractérisé en ce que** la valeur de l'objet de données (V3) indique un paramètre de réglage.

9. Procédé selon une des revendications précédentes, **caractérisé en ce que** les unités de commande sont organisées hiérarchiquement, la deuxième unité de commande (46) étant hiérarchiquement de niveau inférieur à celui de la première unité de commande (44), et l'adresse de réseau (1,2,2) de la deuxième unité de commande (46) étant hiérarchiquement de niveau inférieur à celui de l'adresse de réseau (1,2) de la première unité de commande.

10. Procédé selon une des revendications précédentes, **caractérisé en ce qu'**est prévue au moins une troisième unité de commande (50) qui est reliée à la deuxième unité de commande (46) par l'intermédiaire d'une deuxième ligne de données (68), et qui est hiérarchiquement de niveau inférieur à celui de la deuxième unité de commande (46), moyennant quoi l'objet de données est lu par la troisième unité de commande (50) par l'intermédiaire de la troisième ligne de données (68) et/ou de nouvelles données de l'objet de données sont mémorisées.

11. Procédé selon la revendication 10, **caractérisé en ce que** la première ligne de données et/ou la deuxième ligne de données est une liaison bus CAN, une liaison LAN, une ligne de données V.24, ou une ligne de données SDLC.

12. Procédé selon une des revendications précédentes, **caractérisé en ce que** la transmission se fait par l'intermédiaire de la première et/ou de la deuxième ligne de données à l'aide du protocole Simple Network Management Protocol.

13. Procédé selon une des revendications précédentes, **caractérisé en ce que** dans les unités de commande sont prévus des routeurs (72) qui, en fonction de l'adresse de réseau (1,2,2,1) de l'objet de données (V3), retransmettent une demande de lecture et/ou une demande d'écriture à au moins une adresse de réseau (1,2,2) hiérarchiquement de niveau supérieur à celui de l'objet de données (V3).

14. Procédé selon une des revendications précédentes, **caractérisé en ce que** la position de l'objet de données (V3) dans le réseau est obtenue à l'aide de l'adresse de réseau (1,2,2,1) de l'objet de données (V3).

15. Procédé selon la revendication 10, **caractérisé en ce que** les instructions transmises par une quatrième unité de commande (42) selon un premier standard de transmission de données sont converties par la première unité de commande (44) en instructions d'un deuxième standard de transmission de données, et **en ce que** les données transmises à la première unité de commande (44) par la deuxième et/ou la troisième unité de commande (46, 50) selon le deuxième standard de transmission de données sont converties par la première unité de commande (44) en données selon le premier standard de transmission de données.

16. Procédé selon la revendication 15, **caractérisé en ce que** la première unité de commande (44) est reliée à la quatrième unité de commande (42) par l'intermédiaire d'une troisième ligne de données (62), moyennant quoi cette quatrième unité de commande (42) est de niveau supérieur à celui de la première unité de commande (44) et a accès à l'objet de données (V3) à l'aide de la première unité de commande (44).

17. Procédé selon la revendication 15 ou 16, **caractérisé en ce que** la première, la deuxième et la troisième unités de commande (44, 46, 50) sont disposées dans l'imprimante ou le copieur, et **en ce que** la quatrième unité de commande (42) est disposée à l'extérieur de l'imprimante ou du copieur et est reliée à l'imprimante ou au copieur par une troisième ligne de commande (62).

18. Procédé selon une des revendications 15 à 17, **caractérisé en ce que** la troisième ligne de données (62) est une ligne de données V.24, et **en ce que** l'imprimante ou le copier est relié à la quatrième unité de commande (42) par l'intermédiaire de la troisième ligne de données (62) pour les opérations de maintenance et/ou de réglage, les données de l'objet de données (V3) étant lues par la quatrième unité de commande (42), et/ou de nouvelles données de l'objet de données (V3) étant écrites.

19. Procédé selon une des revendications 15 à 18, **caractérisé en ce que** la quatrième unité de commande (42) est un ordinateur personnel équipé du logiciel approprié.

20. Procédé selon une des revendications précédentes, **caractérisé en ce que** la première unité de commande (44) est un noeud de base du réseau.

21. Procédé selon une des revendications précédentes, **caractérisé en ce que** l'objet de données contient une variable et/ou une constante.

22. Dispositif de commande d'une imprimante ou d'un copieur comportant au moins une première unité de commande (44) à laquelle est associé un premier identifieur (1,2),
comportant au moins une deuxième unité de commande (46) à laquelle est associé un deuxième identifieur (1,2,2),
comportant au moins une ligne de données (64) par l'intermédiaire de laquelle les données peuvent être transmises entre la première unité de commande (44) et la deuxième unité de commande (46),
moyennant quoi la deuxième unité de commande (46) présente une zone de mémoire dans laquelle peut être mémorisé au moins un objet de données (V3),
**caractérisé en ce qu'**à l'objet de données est associé un troisième identifieur (1,2,2,1), et **en ce que** le premier, le deuxième et le troisième identifieurs, sont chacun une adresse de réseau.
